# EUROPEAN PATENT APPLICATION

(11) **EP 2 131 362 A1**
(43) Date of publication of application: **09.12.2009**
(21) Application number: 08010339.3
(22) Date of filing: 06.06.2008
(51) Int. Cl.: G11B 27/034, G11B 27/32, G06F 17/30, H04N 7/24, H04N 5/76

(54) **Method and system for managing content data**

(71) Applicant: Koninklijke KPN N.V., 2516 CK The Hague (NL)
(72) Inventor: Van Steenbergen, Ate Sander, 9737 NN Groningen (NL); Alberts, Albert Willem, 9751 TC Haren (NL); Keijzer, Herman, 9727 DN Groningen (NL)
(74) Representative: Wuyts, Koenraad Maria

(57) **Abstract**

A content management system, a method for managing content and a computer program product are provided. The content management system (102) provides generated content and comprises: a content database and a first compilation (116). The content database (104) comprises a first plurality of content data. The first compilation (116) comprises a second plurality of content data, the second plurality being a proper subset of the first plurality. Upon receiving a request for the first compilation, the system transforms the first compilation (116) into a second compilation in dependency on a user profile. The system provides the second compilation as a representation of the generated content.

## Description

### FIELD OF THE INVENTION

The invention relates to a content management system comprising a content database. The invention also relates to a method for managing content.
The invention also relates to a computer program product.

### BACKGROUND OF THE INVENTION

A Personal Video Recorder (PVR) is a device that records video in a digital format to a disk drive or other medium. The use of a PVR can enhance the experience of watching video, as video can be collected from a variety of sources. A PVR is primarily a device for locally storing recorded content segments, e.g., content segments recorded from a television broadcast.

Published patent application WO 2002/080552, with title: "VIRTUAL PERSONALIZED TV CHANNEL", incorporated herein by reference, discloses a known data management system that enables to automatically play out a plurality of concatenated content information segments. The segments are stored locally in a PVR. The segments are selected on the basis of a criterion independent of a respective resource of respective ones of the segments.

### SUMMARY OF THE INVENTION

If, for example, the known system has stored that a user of the known system has a preference for sitcoms, it can then select a number of sitcom episodes and concatenate them. The known system however cannot go beyond this level. Although it can select episodes in the hope that they will be enjoyable, the known system cannot adapt an episode itself in order to make it more enjoyable.

It is a problem of the prior art that concatenated content cannot be further adapted to an individual's taste.

It is an object of the invention to provide an architecture that enables the personalization of an existing content compilation.

The object is achieved by the content management system according to the invention. The
content management system according to the invention provides generated content and comprises: a content database, a user profile database, an input and a first compilation. The content database comprises a first plurality of content data. Each first specific one of the first plurality of content data comprises a first specific content location indicator, the first specific content location indicator indicating a location of a first specific content segment. The user profile database comprises a user profile. The first compilation comprises a second plurality of content data, the second plurality being a proper subset of the first plurality. The input is operative to receive a request. The request comprises: a user profile reference and a content compilation reference. The content management system is operative to process the request. The processing comprises: selecting the first compilation in dependency on the content compilation reference; selecting the user profile in dependency on the user profile reference; selecting a second specific one of the second plurality of content data; transforming the first compilation into a second compilation, wherein the transforming comprises at least one of the following operations, in dependency on the user profile: deleting the second specific content data from the second plurality; replacing the second specific content data with a third specific one of the first plurality of content data; and inserting before or after the second specific content data the third specific content data; and providing the second compilation as a representation of the generated content.

The method for managing content according to the invention also achieves the object. The method for managing content provides generated content and is for use with a system comprising: a content database, comprising a first plurality of content data, a user profile database comprising a user profile, and a first compilation. Each first specific one of the first plurality of content data comprises a first specific content location indicator, the first specific content location indicator indicating a location of a first specific content segment. The first compilation comprises a second plurality of content data, the second plurality being a proper subset of the first plurality. The method comprises the following steps: receiving a request, wherein the request comprises: a user profile reference; a content compilation reference; processing the request, wherein the processing comprises: selecting the first compilation in dependency on the content compilation reference; selecting the user profile in dependency on the user profile reference; selecting a second specific one of the second plurality of content data; transforming the first compilation into a second compilation, wherein the transforming comprises at least one of the following operations, in dependency on the user profile: deleting the second specific content data from the second compilation; replacing the second specific content data with a third specific one of the first plurality of content data; and inserting before or after the second specific content data the third specific content data; and providing the second compilation as a representation of the generated content.

The invention includes the feature that the system comprises a first compilation. This gives the opportunity to serve content segments based on the first compilation. The known data management system does not work from a first compilation, but rather concatenates content without a pre-existing first compilation.

The system takes the first compilation as a starting point to create a second compilation. For example: In a first step, the first compilation may simply be copied to a temporary compilation. In a second step, the system transforms the temporary compilation into the second compilation in dependency on the user profile. It is noted, that the first and second step can be combined into a single step, wherein the second compilation is created from the first compilation by selectively copying from and/or inserting into the first compilation.

Adapting a first compilation in dependency on the user profile, has the advantage that content is personalized. The user can direct his/her viewing, in a fine grained manner, to content he/she wishes to see. The user can also direct his/her viewing away, in a fine grained manner, from content he/she wishes to avoid seeing.

Furthermore, the invention includes the feature that the content database comprises a first plurality of content data; each first specific one of the first plurality of content data comprises a first specific content location indicator, the first specific content location indicator indicating a location of a first specific content segment.

This feature removes the need for all the content to be locally available. In this way, all storage units in a distributed data network, such as the Internet, can participate in the storing and retrieving of content segments. This has numerous advantages, for example, the combined storage space across a data network is larger than the storage space at a single node of the network. Moreover, if a content segment is stored at multiple nodes of the network, the data can be retrieved from the node that currently has the lowest load. This gives the advantage of better spreading the load.

The second compilation comprises content data. To transform the second compilation into useable content, the content segments can be retrieved from the locations that are indicated by the content location indicators. The content location indicators are comprised in the content data. After retrieving the content segments, they may be compiled into a single compiled content. Both the retrieving and the compiling can be done by the system, or by a local client, or any combination thereof. Retrieving and compiling by the local client has the advantage that the system will not become a bottleneck, due to high bandwidth requirements. Retrieving and compilation by the system has the advantage that the user does not need a means for compiling.

A compilation may be made by concatenating the indicated content segments. A compilation can also be made by mixing an audio segment with a video segment, in some cases replacing the original audio that may have been supplied with the video segment, by the audio segment. A compilation may also be made by mixing subtitles in with a video and audio segment. A compilation may also be made by compiling concatenated high level program sequences into an executable program, using a compiler. In general a compilation can be made in a manner appropriate for the type of content.

It is a further advantage that the content data allows for efficient searching by a user for content data and/or compilations of content data that he may be interested in. The searching may, e.g., be based on attributes in the content data. Using attributes for searching has the advantage that the content segments themselves need not be analyzed.

In a preferred embodiment of the content management system according to the invention, the content database comprises at least one set. The set comprises the second specific content data and the third specific content data. The transforming comprises at least one of the replacing and the inserting. The transforming comprises selecting the third specific content data from the set in dependency on the user profile.

Organizing at least part of the content database in sets has the advantage that a semantic ordering can be imposed on the selecting. For example, the content data in a set may all refer to content that have a semantic commonality. For example, a set may comprise a number of alternatives for a particular scene, for example, alternative endings of a movie. By making the selection from a set, it is avoided that two semantically alternative content data are both selected. For example, it is avoided that a second compilation is made, which has two versions of the same scene.

It is not necessary to automatically assess the semantic content of a content segment in order to create the second compilation. Rather, the invention provides a system to handle semantically similar content data without the need for automatically assessing semantic content.

The set may also comprises content data the can be conveniently placed after a particular content data. For example, the set may comprise commercials.

In a preferred embodiment of the content management system according to the invention, the system comprises a further input; the content management system is configured to receive at the further input a further content data; the content management system is configured for storing the further content data in the first plurality.

The system may have special users, so called providers, which are authorized to add content data to the system. This feature has the advantage that an existing compilation can be extended and improved by other users, for example, by supplying alternatives for existing segments, or by supplying new content segments that can be inserted into a compilation.

A provider does not need to supply the actual content segment itself, he/she can suffice with supplying a content location indicator, which is comprised in the content data. This is an advantage as content data is typically smaller than the corresponding content segment.

The content segment indicated by a content locator, will, at some point, have to be stored at some place, though not necessarily at a storage-system associated with the content management system, such as the content database. Nor, does the content segment indicated by the content locator need to be stored, necessarily, at a storage-system associated with the provider.

If it turns out that the content segment indicated by uploaded content data is not, or no longer, available, the content management system may provide a means to update, or delete, the uploaded content data. In one embodiment, the content management system periodically checks to see if the content segment is still available at the indicated location, for example by attempting to download the content segment. Should the content segment no longer be available, the embodiment may remove or disable the corresponding content data.

On the other hand, a provider may along with the content data, upload the content segment. In this case the content management system can also provide hosting services for the content segment. For example, the content management system may store the uploaded content segment in a content segment database. In this case, when a user requests for a compilation, the content management system adapts the compilation according to the user's preferences, next compiles, e.g. assembles, the compilation from the content segment database and next makes the compiled compilation available for download.

In a preferred embodiment of the content management system according to the invention, the further content data is associated with the set; the content management system is configured for storing the further content data in the set under control of the reference to the set.

In the situation where the provider wants to indicate that his/her content segment is an alternative for another existing content segment, he/she can arrange for his/her content data to be placed in the set. The placing in the set is indicative of being an alternative for the content data which is already present in the set. This has the advantage that the content management system can more easily impose a structure on the second compilation. For example, if the members of a set are alternatives for the same scene, then the content management system can avoid using two alternatives for the same scene in the same compilation. The latter can be achieved by only choosing a single element from the set.

The association between the further content data and the set can, e.g., be supplied along with the further data itself. The association may be expressed by a reference to the set in the content data. The association may be expressed by a reference supplied along with the content data.

In a practical embodiment of the content management system according to the invention, the third specific content data comprises an attribute; the user profile comprises the attribute; the transforming comprises at least one of the replacing and the inserting; the transforming comprises selecting the third specific content data in dependency on the attribute.

One way to organize creating a second compilation is to base this on attributes that are comprised in the user profile, and which attributes may or may not be associated with a particular content data. For example, the user profile may contain the attribute 'no_violence'. In response to finding this attribute in a user profile, the system may refuse to select content data that does not have this attribute associated with it.

On the other hand, the user profile may also comprise an attribute that indicates an aversion of the user. For example, the user profile may comprise the attribute 'war' in response to which the system may refuse to select content data, which is associated with the attribute war.

This system of attributes provides an easy and flexible way to organize the selecting of content data. The attributes may come from a variety of sources. For example, an attribute may be provided by the source of the content data, e.g., a provider. On the other hand attributes may be supplied by specialized attribute servers, or by users in a collaborative fashion.

Attributes can be used together with the set, or without using the set. The set is a collection of content data, which are, e.g., alternatives for each other. A set is typically stored separate from a particular content data. An attribute however is typically stored in a content data. The set has the advantage that look-up is typically faster, as all related content data is available together. The attributes have the advantage that they are more flexible and provide a richer language in which to express the relationships between the content segments.

An attribute may indicate that the content segment is an alternative for some other content segment, for example by referring to the content data corresponding to the other content segment. An attribute may also indicate that it can be optionally used in front, instead, or after a particular content segment. An attribute can also indicate that its content segment is to be used together with a particular content segment, for example, as a sub-title, as an alternative sound track, as a picture-in-picture. The attribute can also indicate a URL which may be offered together with the content segment. The attribute can also indicate a convenient point at which to insert a commercial. The commercial may be supplied from an external source, or may be supplied from the content database.

In a preferred embodiment of the content management system according to the invention, the second specific content data comprises a further attribute; the user profile comprises the further attribute; selecting the second specific content data is done in dependency on the further attribute.

In a preferred embodiment of the content management system according to the invention, the attribute is a reference to an identity of a provider of the further content data. A particular interesting source of attributes is, to automatically associate the id of the provider itself with the content data. In this way, if the user profile comprises the id of the provider, selecting content from this provider may be suppressed. This enables a user to selectively block certain providers. On the other hand, the user profile can also indicate a preference for content data supplied by a certain provider. In this way, the user can indicate that he/she prefers content created by the certain provider.

In a preferred embodiment of the content management system according to the invention, the user profile database comprises a further user profile; the input is operative to receive a further request; the further request comprises: a further user profile reference; the content compilation reference; the system is operative for creating a further second compilation in dependency on the further user profile; the further second compilation is different from the second compilation.

When different viewers request the same content compilation, through a same content compilation reference, the system can serve them a different compilation. For example, this is based on differences in their user profile. For example, if the further user indicated he/she does not want content segments associated with the attribute 'war', then those segments may be suppressed. If, on the other hand, the user indicated he/she has a preference for content segments associated with the attribute 'war', then those segments may be actively selected for.

In this way, the two users of the system both experience an enhanced viewing experience, as neither user is exposed to content he/she does not want to see.

Similarly, if the further user indicated a preference for a certain provider, the further second compilation that is created for him, may include more content data from the provider than are used in the second compilation.

Note that other sources, than the user profile and the further user profile may be used by the system to distinguish the creating of the second and further second compilation. For example, the origin of the user, as is determined from their IP addresses may be used, or the time of day.

In a practical embodiment of the content management system according to the invention, the first specific content segment comprises any one of: a video segment, an audio segment, a subtitle, a document, an artificial landscape capable of being digitally simulated, a computer program, a picture and a web-page.
The computer program product according to the invention comprises computer code for implementing the method according to the invention.

Examples of embodiments of the computer program product are among others: a storage unit comprising the computer program, a server comprising the computer program, etc. The computer code can be fabricated using various well known high-level programming languages, such as, C, C++ or Pascal. The computer code can alternatively be fabricated using low-level programming languages, such as assembly, machine codes or microcode.

Therefore, a content management system, a method for managing content and a computer program product are provided. The content management system provides generated content and comprises: a content database and a first compilation. The content database comprises a first plurality of content data. The first compilation comprises a second plurality of content data, the second plurality being a proper subset of the first plurality. Upon receiving a request for the first compilation, the system transforms the first compilation into a second compilation in dependency on a user profile. The system provides the second compilation as a representation of the generated content.

It is to be noted the US patent application 20020162109, incorporated herein by reference, discloses an architecture for storing content in a distributed network. The patent application does not disclose a means or method for transforming a first compilation into a second compilation in dependency on a user profile.

### BRIEF DESCRIPTION OF THE DRAWINGS

The invention is explained in further detail by way of example and with reference to the accompanying drawings, wherein:
Fig. 1 is a block diagram showing an application of the content management system according to the invention in a data processing system.
Fig.2 is a block diagram showing two content data.
Fig.3 is a block diagram showing two user profiles.
Fig.4 is a block diagram showing a first and second compilation.
Fig.5 is a block diagram showing a set.
Fig.6 is a block diagram showing two further embodiments of content data.
Fig.7 and 8 are block diagrams showing content data used in an online collaborative movie editing system.

Throughout the Figures, similar or corresponding features are indicated by same reference numerals.

### List of Reference Numerals:

- 100: a data processing system
- 102: a content management system
- 104: a content database
- 106: a user profile database
- 108: an input
- 110: a further input
- 112: a client
- 114: a provider
- 116: a first compilation
- 118: an output
- 120: a further provider

- 122: a further client
- 200: a first content data
- 202: content data ID: 123456
- 204: URL: http://www.ex.am.ple/segment1.avi
- 206: attributes: provider:provider1@ex.am.ple
- 210: a second content data
- 212: content data ID: 123460
- 214: URL: http://www.ex.am.ple/segment2.avi
- 216: attributes: no_violence; provider:provider2@ex.am.ple
- 300: a first user profile
- 302: user ID: 314592
- 304: attributes1: no_violence;
- 306: attributes2: provider:provider3@ex.am.ple; rating:PG
- 310: a second user profile
- 312: user ID: 314593
- 314: attributes 1: -
- 316: attributes2: provider:provider1@ex.am.ple; rating:PG
- 400: content data ID: 123456
- 402: content data ID: 123457
- 404: content data ID: 123458
- 406: a second compilation
- 408: content data ID: 123460
- 410: content data ID: 123457
- 412: content data ID: 123458
- 500: a set
- 502: set id: 271828
- 504: content data ID: 123456
- 506: content data ID: 123460
- 600: a third content data
- 602: content data ID: 678
- 604: URL: http://www.ab.cd.efg/sequence1.avi
- 606: attributes: after:content data ID: 123456
- 610: a fourth content data

- 612: content data ID: 876
- 614: URL: http://www.ab.cd.efg/sequence1.avi
- 616: attributes: before:content data ID: 123456
- 702-706: initial content data
- 708-716: new content data
- 902: receiving a request
- 904: creating a second compilation
- 906: a first selecting
- 908: a second selecting
- 910: a third selecting
- 912: a copying
- 914: a deleting
- 916: a replacing
- 918: an inserting

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

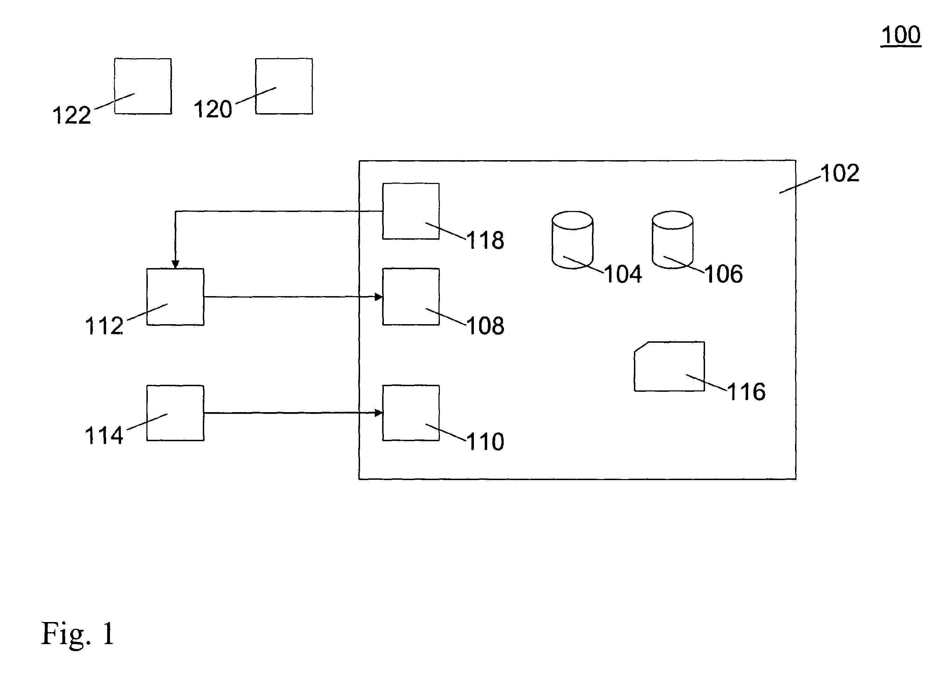

In **Figure 1** a block diagram is shown, illustrating an application of a content management system 102 according to the invention in a data processing system 100.

The data processing system 100 comprises the content management system 102, a client 112, and a provider 114. The client 112 is typically used by a user.

The content management system 102 comprises: an input 108, an output 118, a further input 110, a content database 104, and a user profile database 106.

The client 112 is connected to input 108, e.g. via a data network (not shown). The client 112 can submit a request to input 108. The client 112 can receive from output 118 a second compilation. The client 112 is associated with a user profile, through the use of a user profile reference. The user profile is stored in user profile database 104. Typically, user profile database 104 stores multiple user profiles.

The provider 114 is connected, e.g. via the data network (not shown), to further input 110. The provider 114 can supply a submission to further input 110. The submission comprises further content data. The further content data is stored in content database 104. The provider, or a different provider, can also use further input 110 for sending a first compilation 116. The first compilation is associated with a content compilation reference. Typically, the functionality of a provider 114 will be combined with the functionality of a client 112.

The client 112 can request the first compilation, through the use of the content compilation reference. In response to his/her request, the client 112 will receive a second compilation. The second compilation that the client receives may be modified by the content management system 102. The modification is done on the basis of the user profile associated with the user. The modification can also be based on the relation client 112 has to provider 114. This can be expressed in the user profile. But the relation may also be expressed through the use of a relations database (not shown).

Typically, client 112 connects with input 108 through a data network, such as the Internet, through a protocol, such as HTTP. The client 112 may use for example the 'GET' command. Also the connection between client 112 and output 118 may go through a data network. Output 118 sends data and/or commands. Output 118 may also use the HTTP protocol, and, use, for example, the 'POST' command.

Typically, system 102 will operate a web server or web service, which services front side request, such as those made by client 112. Input 108 may be executed as such a web service.
Input 108 accepts data and/or commands from client 112 and makes them available to system 102 as appropriate.

The user ID is typically obtained from client 112. The user of client 112 may, for example, type in his account name and/or password. Or, for example, a unique identifier, serving as a user ID, may be embedded in software of client 112. In the latter case, client 112 is personalized for this particular user.

The content compilation reference will typically be obtained from a context in which client 112 or its user resides. For example, the user may obtain the content compilation reference from an other website, or receive it, from a friend, in his email.

Similarly, provider 114 may connect with further input 110 through the data network.

System 102 will typically also provide a web-service enabling a user to create a user profile. For example, in a web page a user may select a user ID and fill out a form with preferences. Creating or adapting a user profile may occur in many ways, for example, by selecting from default profiles, by interactively answering questions, or by typing in attributes. The attributes may, e.g., be selected from a list of possible attributes or be free-form.

Typically, a user will have a fixed profile, which is used for more than one request. However, the user may also create an ephemeral profile, which is only used for a particular request.

The system 102 may also present exceptions. For example, when a particular compilation is regarded by system 102 as highly desirable, yet falling, possibly only just, outside of the user profile, system 102 may offer the user to see this content anyway.

After a compilation according to the user profile has been watched, system 102, may suggest alternate compilations that do not abide by the user profile. In this way the user may explore content that he ordinarily would not watch.

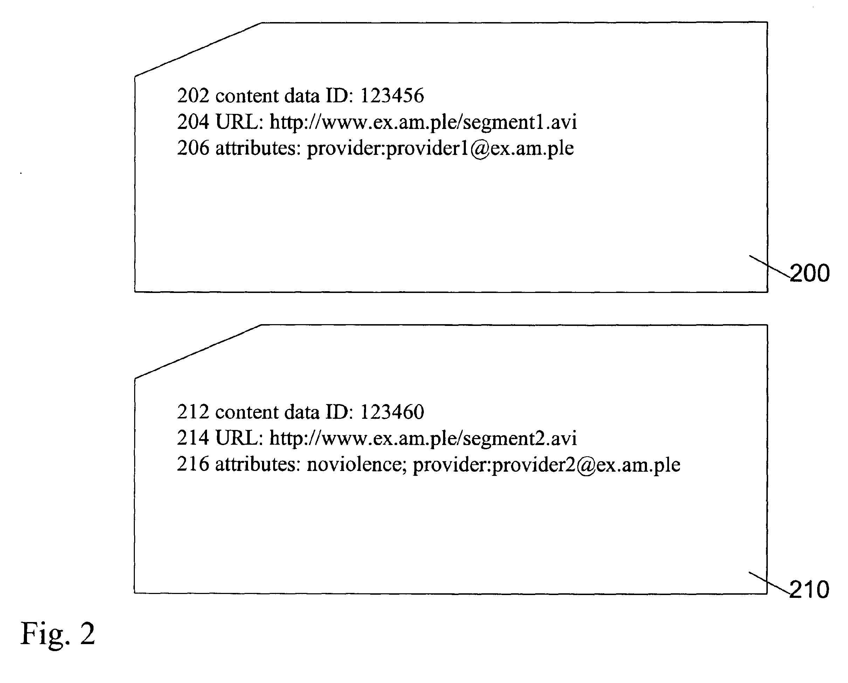

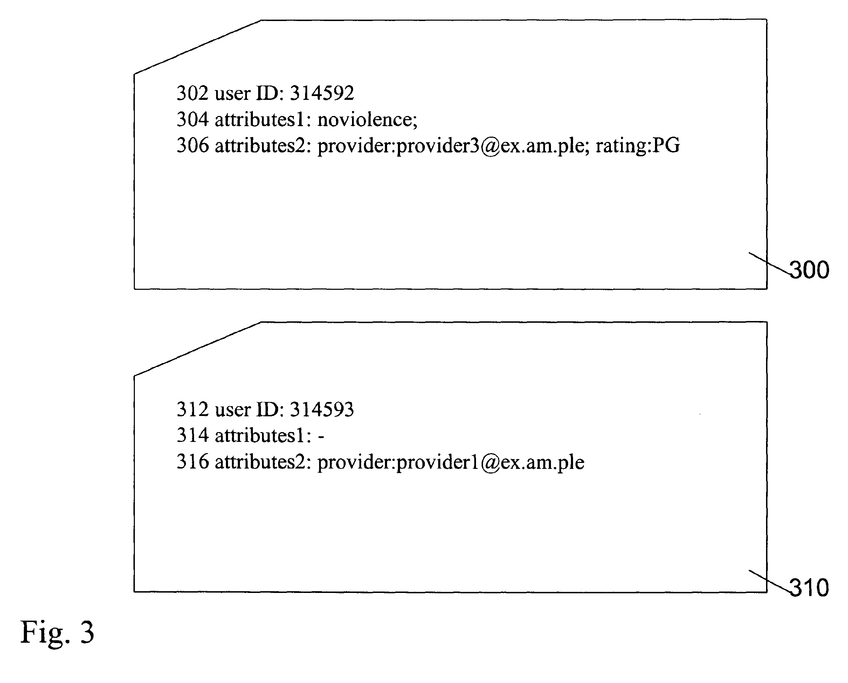

Through the **Figures 2****,** **3** **and** **4** an example is presented of the operation of the content management system 102.

The provider provides content data 200 by embedding the content data in a submission, and sending the submission to further input 110.

Content data 200 comprises information descriptive of a content segment. In this example content data 200 comprises: a content data id 202, a Uniform Resource Locator (URL) 204 and a set of attributes 206.

The content data id 202 will later be used to refer to the content data. In an alternative embodiment, the content data id is generated by system 102, and inserted into the content data 200. In this example the content data 200 has the content id 123456.

URL 204 indicates where a content segment that corresponds to content data 200 can be found. Note that the content segment does not necessarily reside on a system affiliated with system 102, although this is possible. Instead of a URL also another system can be used, e.g., an URI. Instead of using an URL 204 also an identifier can be used that is indicative of content on one or more particular sites, e.g., a YouTube content identification number. Attributes 206 comprise descriptive keywords that are associated to the content segment indicated by URL 204. The attributes 206 may partly be supplied by the provider 114, but may also be, e.g., automatically provided by system 102.

In this example attributes 206 comprise an automatically generated identifier of the provider, in this case his/her email address is used, alternatively a login-name may be used, etc. In this case the email address: provider:provider1@ex.am.ple is used.

The content data 200 is stored in content database 104. The content data 200 is not necessarily stored in the form it was received by system 102. As is convenient, the system 102 may reformat the data, or filter out some data elements. Similarly, when the content management system 102 provides content data to client 112 through a second compilation, the content data may be reformatted for the purpose. For example, the content management system 102 may remove attributes from the content data. Indeed, the second compilation may primarily comprise of content location indicators.

The content database 104 also comprises content data with ids: 123457, 123458. The latter content data could also have been uploaded by the provider, but they may also have been uploaded by a different provider.

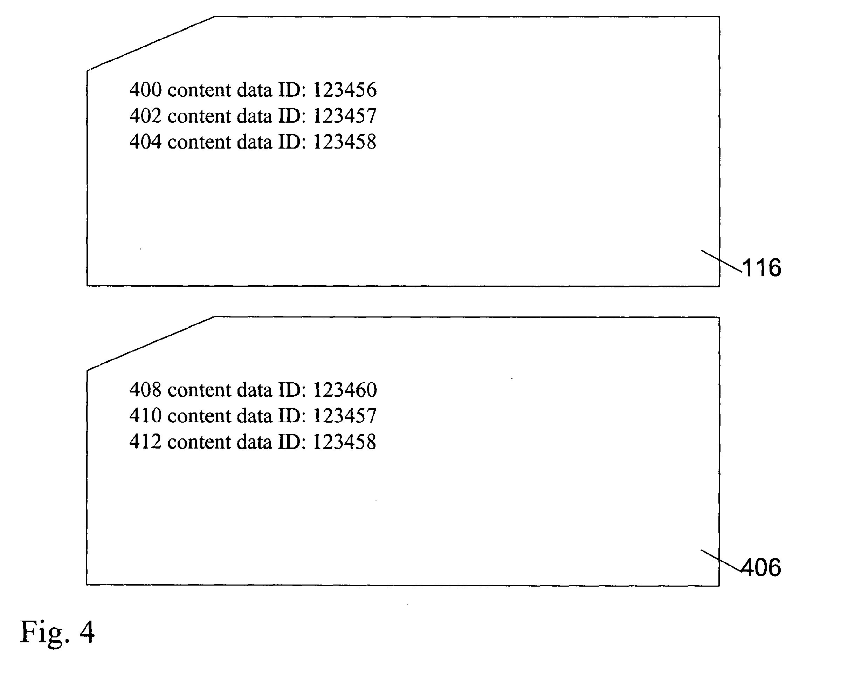

The content management system 102 also comprises a first compilation 116. The first compilation is further illustrated in Figure 4. The first compilation comprises three content data ids: content data ID: 123456, content data ID: 123457 and content data ID: 123458. The content data ids are indicated with reference signs, respectively 400, 402 and 404.

At some point, the first compilation 116 is provided, possibly by the provider. The first compilation 116 indicates that the content segments indicated by the content data indicated by the content ids indicated at 400, 402 and 404 are suitable for compilation. For example, the compilation may be a concatenation in the order in which the content ids are listed in the first compilation 116.

At some point a further provider 120, which can also take part in data processing system 100 supplies a submission containing content data 210. For clarity, the connection between further provider 120 and the further input 110 could use the data network, and is not shown in Figure 1. Content data 210 comprises a content id 212, a content location indicator 214 and attributes 216.

The content id 212 indicates the content id 123460. The content location indicator 214 indicates a location where a content segment corresponding to this content data, can be found. The attributes 216 comprise an automatically generated attribute, namely, the email address of the further provider 120. The attributes 216 also comprise the attribute 'no_violence', which was also supplied by the further provider 120, along with his/her submission.

The client 112 is associated with a first user profile 300, through a user ID: 314592. The user ID: 314592 is indicated at 302. First user profile 300 comprises two sets of attributes: 304 and 306. The attributes indicated at 304 comprise attributes1: no_violence. This means that the user has a preference for content segments that are associated, through a corresponding content data, with the attribute no_violence. In some embodiments, this preference is absolute, i.e. no segments without the attribute are allowed. In some embodiments, this preference is not absolute, i.e. the attribute is only a factor in deciding to select a content segment.

The attributes indicated at 306 comprise attributes2: provider:provider3@ex.am.ple; rating:PG. The attributes 306 indicate that the user of client 112 has an aversion for content segments associated, through a content data, with those attributes. In particular, the user of client 112 has an aversion against content data provided by a provider with email address provider3@ex.am.ple. The user of client 112 also has an aversion against content data which is rated 'PG', i.e. Parental Guidance Suggested. The latter aversion may be used to create a child safe version of movie. For example, the movie may be expressed in the form of a first content compilation. When the movie is watched by a child, any scene associated with the attribute 'PG' can be suppressed. The result is a version of the movie safe for watching by a minor. In a more elaborate version, a suppressed scene may be replaced by a version safe for children.

A further client 122 is typically used by a further client. The further client 122 is associated with a second user profile 310, through a user ID: 314593. The user ID: 314593 is indicated at 312. Second user profile 310 comprises two sets of attributes: 314 and 316. Attributes 314 is empty. Attributes 316 comprise: attributes2: provider:provider1@ex.am.ple. The latter indicates that the further user has an aversion against content data provided by a provider with email address provider1@ex.am.ple, i.e. against content data provided by the provider 114.

An attribute may also explicitly indicate that a particular content segment is a replacement of some other content segment. For example, by introducing the "replacement content-id", wherein content-id is a reference to the particular content segment's content data.

Attributes may also comprise a value. Examples of such attributes are: age limit, favorite color, date, year, etc. This allows system 102 to select, e.g., movies made after 2006.

For clarity, the connection between further client 122 and the input 108 or output 118, could use the data network, and is not shown in Figure 1.

During operation the client 112 makes a first request. The first request comprises a content compilation reference that refers to the first compilation 116. The first request also comprises a reference to user ID: 314592.

The content management system 102 retrieves the first compilation 116, on the basis of the content compilation reference. The content management system 102 also retrieves the first user profile 300, on the basis of the user ID: 314592, indicated at 302.

After inspection of the first compilation 116, the content management system 102 notices that client 112 has a preference for content segments associated with the attribute 'no_violence'. The content management system 102 also notices that, in the content database 104 there is stored a content data associated with 'no_violence'. The first content data in the first compilation 116 is not associated with 'no_violence'. The content management system 102 next proceeds to making the second compilation.

As a starting point, the content management system 102 copies the first compilation 116 into the second compilation 406. Next, the second compilation 406 is adapted to the preferences and aversions of the client 112. In this case, a content data not associated with 'no_violence' is replaced by a content data which is associated with 'no_violence'. When the content management system 102 is finished with creating the second compilation 406, the second compilation 406 is sent to client 112, through output 118.

The further client 122 makes a second request. The second request comprises a content compilation reference that refers to the first compilation 116. The second request also comprises a reference to user ID: 314593.

The content management system 102 retrieves the first compilation 116, on the basis of the content compilation reference. The content management system 102 also retrieves the second user profile 310, on the basis of the user ID: 314593, indicated at 312.

After inspection of the first compilation 116, the content management system 102 notices that the further client 122 has an aversion for content segments associated with the attribute 'provider:provider1@ex.am.ple'. The content management system 102 also notices that the first compilation 116 comprises such a content segment, i.e. the content segment indicated by content data 200. The content management system 102 next proceeds to making a second compilation.

As a starting point the content management system 102 copies the first compilation 116 into the second compilation 406. Next, the second compilation 406 is adapted to the preferences and aversions of the further client 122. In this case, a content data associated with 'provider:provider1@ex.am.ple' is replaced by a content data which is not associated with 'provider:provider1@ex.am.ple'. When the content management system 102 is finished with creating the second compilation 406, the second compilation 406 is sent to client 122, through output 118.

Note, that for client 112 and further client 122 the first compilation is adapted in the same way, with the second compilation 406 resulting in both situations. For client 112, a content data was replaced with another content data, since the content management system 102 concluded on the basis of the attributes that client 112 would prefer the other content data. Instead of replacing the content data 200, the content management system 102 could also have added or inserted content data 210.

For client 122, a content data was replaced with another content data, since the content management system 102 concluded on the basis of the attributes that client 122 would not like the original data. Instead of replacing content data 200, the content management system 102 could also have removed content data 200.

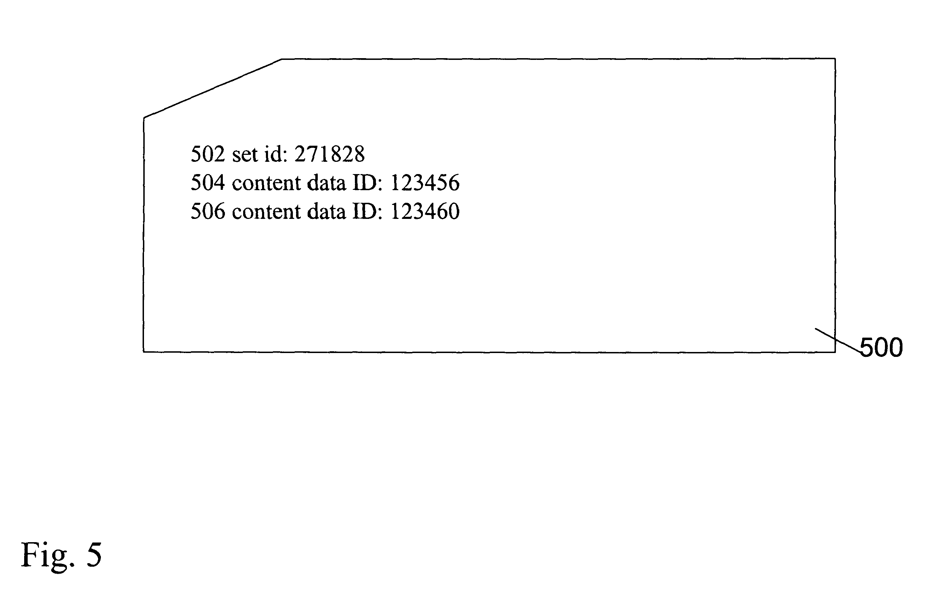

In **Figure 5** a block diagram is shown of an embodiment of a set.

As the content management system 102 selects content data for replacement, deletion or insertion, it is convenient to use sets to indicate related content.

At the moment, the further provider 120, sends content data 210 to further input 110, he/she can also indicate that content data 210 is an alternative for content data 200. Content management system 102 can then create set 500. Content management system 102, creates a set id and associates the content id: 123456 and content id: 123460 with the set id. Content management system 102 may store the set 500 in the content database 104. Content management system 102 may also store the set 500 in a set database (not shown).

When the content management system 102 contemplates replacing a particular content data in the first compilation, for example, based on aversions of a user, the content management system 102 can check if a set is available of which the particular content data is a member. Content management system 102 may then restrict, choosing a replacement for the particular content data from the set.

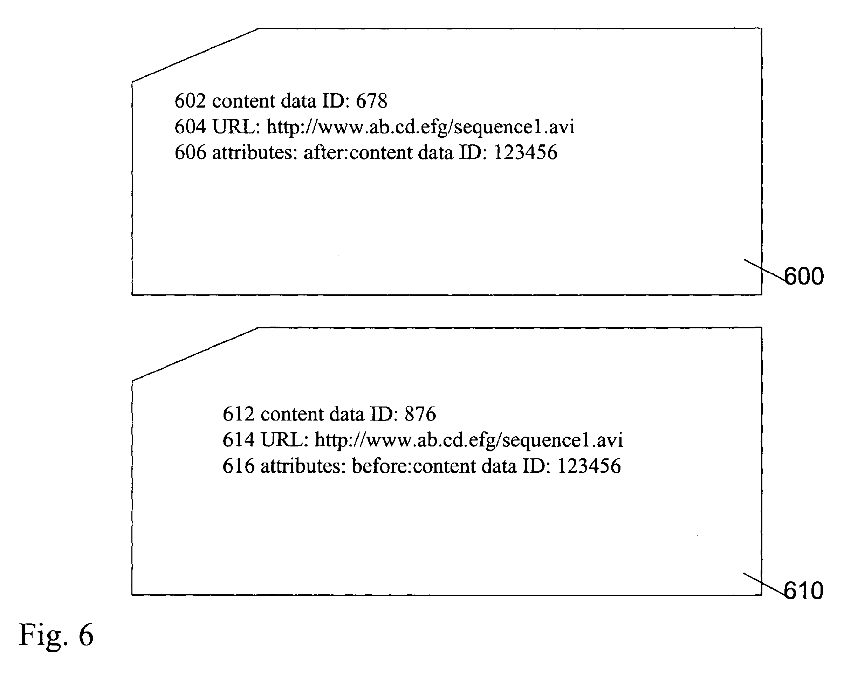

In **Figure 6** two further embodiments of content data are shown.

A third content data 600 comprises a content id 602, a URL 604 and attributes 606. Attributes 606 comprise: after:content data ID: 123456.

The attribute 'after:content data ID: 123456' indicates to the content management system 102 that the content segment indicated by URL 604 is intended for viewing after the content segment indicated by the content data with content id 123456, i.e. content data 200.

A fourth content data 610 comprises a content id 612, a URL 614 and attributes 616. Attributes 616 comprise: before:content data ID: 123456

The attribute 'before:content data ID: 123456' indicates to the content management system 102 that the content segment indicated by URL 614 is intended for viewing before the content segment indicated by the content data with content id 123456, i.e. content data 200.

The 'after' and 'before' attributes can be combined, to more precisely indicate how a particular content data can best be inserted into a first compilation.

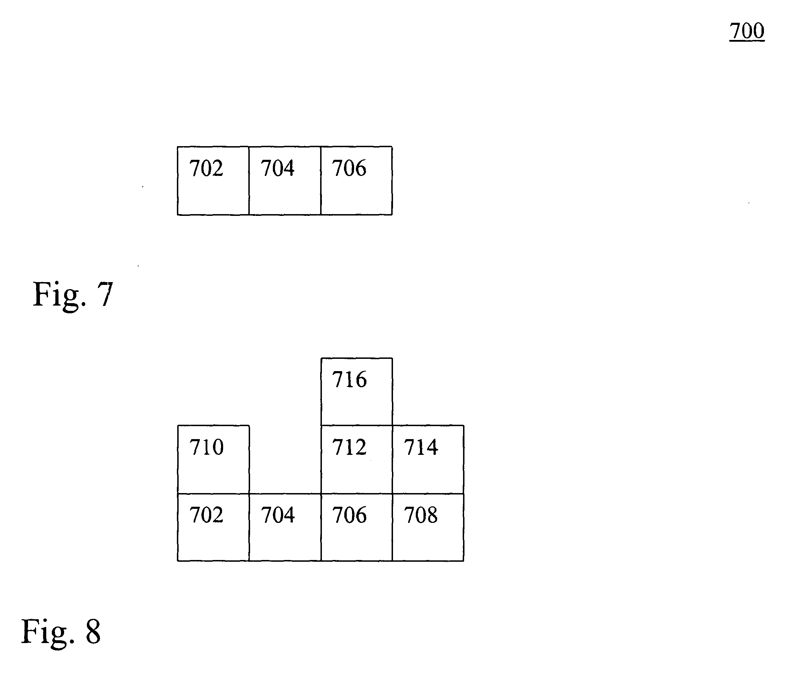

**Figure 7** and **Figure 8** illustrate an online collaborative movie editing system.

The movie editing system allows multiple providers to submit new scenes and/or alternatives for existing scenes. A number of providers can, in this way, collaboratively create a movie.

Initially, a first provider submitted initial content data 702, 704 and 706. The initial content data refers to three corresponding initial scenes. The first provider also submitted a first compilation, comprising of references to content data 702, 704 and 706. The first compilation is illustrated in Figure 7.

Later providers provided new content data: 708, 710, 712, 714 and 716. The new content data includes an additional scene 708, which elaborates on the ending 706. This situation is illustrated in Figure 8.

Alternatives for a particular scene are indicated by placing the alternative vertically above the particular scene. A number of alternatives for a particular scene are stored as a set. In this way, four sets are created. The first set comprises content data: 702 and 710. The second set comprises content data: 704. The third set comprises content data 706, 712 and 716. The fourth set comprises 708 and 714.

When a client requests the first compilation, the movie editing system will select a number of content data in a particular order. The movie editing system will first select the four sets. Next, the movie editing system will select one content data from each set.

For example, suppose content data 708 has the attribute 'violent' and suppose the user has an aversion for content with that attribute. The movie editing system may then select content data 714 instead of content data 708. The other choices the movie editing system makes can be based on similar and other considerations, taking into account, e.g., preferences, aversions, but perhaps also the average rating of a content data, etc. For example, the movie editing system may select the compilation: {710, 704, 706, 714}.

The movie editing system also has the advantage that when a user watches the same movie twice, he may, optionally, see a different version.

In a further embodiment of the content management system according to the invention the first compilation is linked to a particular content data. In this way the client and/or user need not see the notion of the first compilation. For example, the user may click on an icon representing a CD made by a famous guitarist. As a result the client will start to retrieve the location indicated by the icon, e.g. using a web-browser. As the retrieving is initiated, the content management system 102, will link the icon to the first compilation. The content management system will create the second compilation based on the user's preferences. For this user the content indicated by the icon becomes the particular list of links in the second compilation. After receiving the list of links, i.e. the second compilation, the client proceeds to retrieve the first link on the list, the first link may be a first song to be played, e.g. an mp3-song. Next, the client retrieves the second link on the list. The second link may be a photo of the guitarist, to be displayed simultaneously with playing the song. Next, the client retrieves the next link, which is a second song to be played, after the first song has finished. Next the client retrieves a next link which is a link where the CD may be bought.

In this example, the second song was only selected because the user is older than 12. The picture was selected because the user's profile indicates that he likes pictures with his songs.

Typically the first compilation is only used as a place holder to serve as a reference for which a second compilation is to be created. Typically, the first compilation is never changed. After more content data is added to the system the second compilation may show little resemblance, if at all, with the original first compilation. It may be that no user will see the first compilation, as it is always adapted in the second compilation. Possibly, each user may see a different compilation.

Although, typically, the first compilation is not changed, in one embodiment, the system may add all related content to the first compilation. In this way the first compilation serves as a collection of related content. Initially, the collection only comprises a few content data, but as more content data is added to the system, the collection grows and comprises all content data from which the system can choose when this particular collection is chosen. The second compilation is then selected only from the first compilation on the basis of the user profile.

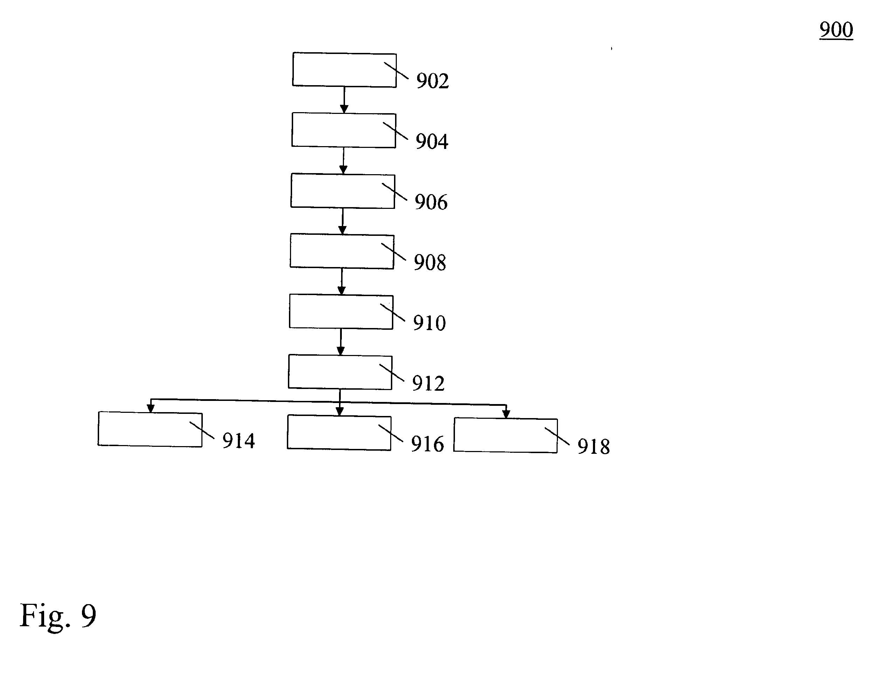

In **Figure 9** an embodiment of a method 900 according to the invention is shown. Method 900 is used with a system comprising: a content database 104 comprising a first plurality of content data, a user profile database 106 comprising a user profile, a first compilation comprising a second plurality of content data, the second plurality being a proper subset of the first plurality.

Method 900 comprises the following steps: receiving a request 902 and creating a second compilation 904. Typically creating the second compilation 904 is done after receiving the request 902, but receiving the request 902 is optional. The method 900 may also, for example, create the second compilation in anticipation of receiving the request. The request comprises: a user profile reference and a content compilation reference.

Creating 904 comprises: a first selecting 906, a second selecting 908, a third selecting 910, a copying 912. Creating 904 also comprises at least one of a deleting 914, a replacing 916 and an inserting 918.

First selecting 906 comprises selecting the first compilation in dependency on the content compilation reference. Second selecting 908 comprises selecting the user profile in dependency on the user profile reference. Third selecting 910 comprises selecting a second specific one of the second plurality of content data. Copying 912 comprises copying the first compilation to the second compilation.

Deleting 914 comprises deleting the second specific content data from the second compilation; Replacing 916 comprises replacing the second specific content data with a third specific one of the first plurality of content data. Inserting 918 comprises inserting before or after the second specific content data the third specific content data.

Deleting 914, replacing 916 and inserting 918 are performed in the second compilation and in dependency on the user profile.

The order of the steps may be varied, for example: the order of the first selecting 906 and second selecting 908 may be reversed.

The present invention, as described in embodiments herein, may be implemented using a programmed processor executing programming instructions that are broadly described above in flow chart form that can be stored on any suitable electronic storage medium. However, those skilled in the art will appreciate that the processes described above can be implemented in any number of variations and in many suitable programming languages without departing from the present invention. For example, the order of certain operations carried out can often be varied, additional operations can be added or operations can be deleted without departing from the invention. Error trapping, enhancements and variations can be added without departing from the present invention. Such variations are contemplated and considered equivalent.

The present invention could be implemented using special purpose hardware and/or dedicated processors. Similarly, general purpose computers, microprocessor based computers, digital signal processors, microcontrollers, dedicated processors, custom circuits, ASICS and/or dedicated hard wired logic may be used to construct alternative equivalent embodiments of the present invention. In a claim enumerating several means, several of these means may be embodied by one and the same item of hardware

Those skilled in the art will appreciate that the program steps and associated data used to implement the embodiments described above can be implemented using disc storage as well as other forms of storage, such as, for example, Read Only Memory (ROM) devices, Random Access Memory (RAM) devices, optical storage elements, magnetic storage elements, magneto-optical storage elements, flash memory and/or other equivalent storage technologies without departing from the present invention. Such alternative storage devices should be considered equivalents.

While the invention has been described in conjunction with specific embodiments, it is evident that many alternatives, modifications, permutations and variations will become apparent to those of ordinary skill in the art in light of the foregoing description. Accordingly, it is intended that the present invention embrace all such alternatives, modifications and variations as fall within the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A content management system (102) for providing generated content and comprising:
a content database, a user profile database (106), an input (108) and a first compilation (116),
wherein:
the content database (104) comprises a first plurality of content data;
each first specific one of the first plurality of content data comprises a first specific content location indicator, the first specific content location indicator indicating a location of a first specific content segment;
the user profile database (106) comprises a user profile;
the first compilation (116) comprises a second plurality of content data, the second plurality being a proper subset of the first plurality;
the input (108) is operative to receive a request;
the request comprises: a user profile reference and a content compilation reference;
the content management system (102) is operative to process the request,
wherein the processing comprises:
selecting the first compilation (116) in dependency on the content compilation reference;
selecting the user profile in dependency on the user profile reference;
selecting a second specific one of the second plurality of content data;
transforming the first compilation (116) into a second compilation,
wherein
the transforming comprises at least one of the following operations, in dependency on the user profile:
deleting the second specific content data from the second plurality;
replacing the second specific content data with a third specific one of the first plurality of content data; and
inserting before or after the second specific content data the third specific content data; and
providing the second compilation as a representation of the generated content.

2. A content management system (102) as in Claim 1, wherein:
the content database (104) comprises at least one set (500);
the set (500) comprises the second specific content data and the third specific content data;
the transforming comprises at least one of the replacing and the inserting;
the transforming comprises selecting the third specific content data from the set (500) in dependency on the user profile.

3. A content management system (102) as in any one of the previous claims, wherein:
the content management system (102) comprises a further input (110);
the content management system (102) is configured to receive at the further input (110) a further content data;
the content management system (102) is configured for storing the further content data in the first plurality.

4. A content management system (102) as in Claim 3, insofar it refers to Claim 2,
wherein:
the further content data is associated with the set (500);
the content management system (102) is configured for storing the further content data in the set (500) under control of the reference to the set (500).

5. A content management system (102) as in any one of the previous claims, wherein the third specific content data comprises an attribute;
the user profile comprises the attribute;
the transforming comprises at least one of the replacing and the inserting;
the transforming comprises selecting the third specific content data in dependency on the attribute.

6. A content management system (102) as in any one of the previous claims, wherein the second specific content data comprises a further attribute;
the user profile comprises the further attribute;
selecting the second specific content data is done in dependency on the further attribute.

7. A content management system (102) as in Claim 5 or 6 insofar as they refer to claim 3, wherein
the attribute and/or the further attribute is a reference to an identity of a provider of the further content data.

8. A content management system (102) as in any one of the preceding claims, wherein the user profile database (106) comprises a further user profile;
the input (108) is operative to receive a further request;
the further request comprises:
a further user profile reference;
the content compilation reference;
the content management system (102) is operative for creating a further second compilation in dependency on the further user profile.
the further second compilation is different from the second compilation.

9. A content management system (102) as in any one of the preceding claims wherein the first specific content segment comprises any one of:
a video segment,
an audio segment,
a subtitle,
a document,
an artificial landscape capable of being digitally simulated,
a computer program,
a picture and
a web-page.

10. A method for providing generated content for use with a system comprising:
a content database (104) comprising a first plurality of content data,
a user profile database (106) comprising a user profile, and
a first compilation (116),
wherein:
each first specific one of the first plurality of content data comprises a first specific content location indicator, the first specific content location indicator indicating a location of a first specific content segment;
the first compilation (116) comprises a second plurality of content data, the second plurality being a proper subset of the first plurality;
the method comprises the following steps:
receiving a request, wherein the request comprises:
a user profile reference;
a content compilation reference;
processing the request, wherein the processing comprises:
selecting the first compilation (116) in dependency on the content compilation reference;
selecting the user profile in dependency on the user profile reference;
selecting a second specific one of the second plurality of content data; transforming the first compilation (116) into a second compilation, wherein
the transforming comprises at least one of the following operations, in dependency on the user profile:
deleting the second specific content data from the second compilation;
replacing the second specific content data with a third specific one of the first plurality of content data; and
inserting before or after the second specific content data the third specific content data; and
providing the second compilation as a representation of the generated content.

11. A computer program product comprising computer code for implementing the method as defined in claim 10.
